# EUROPÄISCHE PATENTSCHRIFT

(11) **EP 2 254 709 B1**
(45) Veröffentlichungstag und Bekanntmachung des Hinweises auf die Patenterteilung: **18.04.2018**
(21) Anmeldenummer: 09706085.9
(22) Anmeldetag: 30.01.2009
(51) Int. Cl.: B08B 17/06, D06M 11/00, D06Q 1/14, D06M 11/83, D06M 23/08, D06M 23/16, B63B 1/34

(54) **UNBENETZBARE OBERFLÄCHEN**
NON-WETTABLE SURFACES
SURFACES NON MOUILLABLES

(30) Priorität: 01.02.2008 DE 102008007426
(43) Veröffentlichungstag der Anmeldung: 01.12.2010
(73) Patentinhaber: Rheinische Friedrich-Wilhelms-Universität Bonn, 53113 Bonn (DE)
(72) Erfinder: CERMAN, Zdenek, 65817 Eppstein (DE); STRIFFLER, Boris, Felix, 53909 Zülpich-Nemmenich (DE); WIERSCH, Sabine, 53111 Bonn (DE); BARTHLOTT, Wilhelm, 53115 Bonn (DE)
(74) Vertreter: dompatent von Kreisler Selting Werner - Partnerschaft von Patent- und Rechtsanwälten mbB
(86) Internationale Anmeldenummer: PCT/EP2009/051044
(87) Internationale Veröffentlichungsnummer: WO 2009/095459

(56) Entgegenhaltungen:
- EP-A- 1 350 872
- WO-A-2007/099141
- WILHELM BARTHLOTT ET AL: "The Salvinia Paradox: Superhydrophobic Surfaces with Hydrophilic Pins for Air Retention Under Water", ADVANCED MATERIALS, vol. 22, no. 21, 4 June 2010 (2010-06-04), pages 2325-2328, XP055234318, DE ISSN: 0935-9648, DOI: 10.1002/adma.200904411
- BARTHLOTT WILHELM ET AL: "Mimicry and ultrastructural analogy between the semi-aquatic grasshopper Paulinia acuminata (Orthoptera: Pauliniidae) and its foodplant, the water-fern Salvinia auriculata (Filicatae: Salviniaceae)", AMAZON, INSTITUTO NACIONAL DE PESQUISAS DA AMAZÔNIA, vol. 13, no. 1-2, 1 January 1994 (1994-01-01), pages 47-58, XP009187590, ISSN: 0065-6755
- Robert B Kaul: "Aquatic Botany, 2 (1976) 215--234 215 o Elsevier Scientific Publishing Company, Amsterdam --Printed in The Netherlands ANATOMICAL OBSERVATIONS ON FLOATING LEAVES", Aquat. Bot, 1 January 1975 (1975-01-01), pages 215-234, XP055403191, Retrieved from the Internet: URL:http://ac.els-cdn.com/030437707690022X /1-s2.0-030437707690022X-main.pdf?_tid=ab7 072a6-8f07-11e7-8141-00000aacb361&acdnat=1 504265056_6dd050ebd440373dec529abf1eefda70
- MAYSER M J ET AL: "Measuring air layer volunes retained by submerged floating-ferns Salvinia and biomimetic superhydrophobic durfaces", BEILSTEIN JOURNAL OF NANOTECHNOLOTY, vol. 5, 10 June 2014 (2014-06-10), pages 812-821, DOI: 10.3762/bjnano.5.93
- WILHELM BARTHLOTT ET AL: "Classification of trichome types within species of the water fern Salvinia , and ontogeny of the egg-beater trichomes", BOTANY = BOTANIQUE, vol. 87, no. 9, 1 September 2009 (2009-09-01), pages 830-836, XP055401911, ISSN: 1916-2790, DOI: 10.1139/B09-048
- DITSCHE PETRA ET AL: "Elasticity of the hair cover in air-retaining Salvinia surfaces", APPLIED PHYSICS A MATERIALS SCIENCE & PROCESSING, SPRINGER BERLIN HEIDELBERG, BERLIN/HEIDELBERG, vol. 121, no. 2, 26 August 2015 (2015-08-26), pages 505-511, XP035554118, ISSN: 0947-8396, DOI: 10.1007/S00339-015-9439-Y [retrieved on 2015-08-26]

## Beschreibung

Die vorliegende Erfindung betrifft unbenetzbare Oberflächen, Verfahren zu ihrer Herstellung und ihre Verwendung.

WO 96/04123 betrifft selbstreinigende Oberflächen von Gegenständen mit Erhebungen hydrophobierten Materials. Auf solchen Oberflächen abgelagerte Verunreinigungen können durch bewegtes Wasser entfernt werden.

Solche Oberflächen sind in Einsatzbereichen interessant, in denen Oberflächen in Kontakt mit Verschmutzungen, beispielsweise aus der Luft stehen und durch gelegentlichen Kontakt mit Wasser, beispielsweise Regen, gereinigt werden können. Solche Oberflächen weisen - wie sich durch Untersuchungen ergeben haben - Kontaktwinkel von über 130° mit Wasser auf. Die sich kugelförmig ausbildenden Tropfen sind nicht in der Lage, die Oberfläche zu benetzen.

US 2005/0061221 beschreibt das Problem der Reduzierung des Reibungswiderstandes bei einer Relativbewegung zwischen einer festen Oberfläche und einer Flüssigkeit. Beschrieben ist hierfür eine hierarchische, fraktale Struktur. Ausführungsbeispiele sind nicht beschrieben.

WO 2005/005679 betrifft Nanofasern und Strukturen, die Nanofasern umfassen, sowie ihre Verwendung.

WO 2007/099141 betrifft unbenetzbare Oberflächen, bei denen die Oberflächen hydrophobe Filamente aufweisen, gemäß dem Oberbegriff des Anspruchs 1.

Es hat sich gezeigt, dass entsprechende Oberflächen zwar unbenetzbar sind, aber insbesondere für Langzeitanwendungen oder für Anwendungen im strömenden Gewässern noch nicht optimale Unbenetzbarkeit zeigen.

Überraschenderweise zeigt sich, dass Strukturen, die hervorragende Unbenetzbarkeiten an der Luft im Kontakt mit Wasser zeigen, nicht in der Lage sind, diese Unbenetzbarkeit dauerhaft im untergetauchten Zustand aufrechtzuerhalten.

Somit bleibt weiterhin ein Wunsch nach Oberflächen, die durch Wasser unbenetzbar sind, d.h. nach Kontakt mit Wasser nicht nass sind. Solche sind geeignet, den Reibungswiderstand zwischen Wasser und der Oberfläche zu reduzieren und haben auch sonst Eigenschaften, die technologisch wünschenswert sind, wie Thermoisolation oder Vermeidung von Biofouling.

Aufgabe der Erfindung war es, solche Oberflächen zur Verfügung zu stellen.

Gelöst wird die Aufgabe durch einen Gegenstand mit einer Oberfläche gemäß Anspruch 1.

Erfindungsgemäß wird also ein Gegenstand mit einer Oberfläche bereitgestellt. Die erfindungsgemäßen Strukturen weisen Bereiche auf, die chemisch anisotrop sind, bei denen die Oberflächeneigenschaften dazu führen, dass nur Teile der Filamente hydrophob sind, während andere hydrophil sind.

Hydrophil bedeutet, dass der Kontaktwinkel in diesen Bereichen zwischen der Oberfläche und Wasser < 90° ist.

In einer Ausführungsform ist ein Teilbereich der Struktur zusätzlich mit einer Ladung versehen. Elektrostatische Aufladung fördert die Unbenetzbarkeit.

In Ausführungsformen ist das Filament zusätzlich strukturell anisotrop, d.h. dass es Bereiche gibt, in denen die Filamente eingeschnitten sind, insbesondere in denen sie Hinterschneidung ausbilden.

In einer besonders bevorzugten Ausführungsform sind die Filamente sowohl mit chemisch anisotropen Bereichen als auch mit strukturell anisotropen Bereichen versehen.

Ein Filament im Sinne dieser Anmeldung ist jedes längliche Gebilde, gleich welchen Materials, das die geforderten Eigenschaften aufweist. Im Textilbereich wird unterschieden zwischen abstehenden Haaren, abstehenden Fasern und Filamenten, die eine sehr große Länge haben. Im Sinne dieser Anmeldung wird der Begriff "Filament" jedoch für jede Art Struktur verwendet, die Enden aufweist. Länge und Durchmesser ergeben sich durch die weitere Definition in den Patentansprüchen. Das Wort "Filament" ist für diese Anmeldung gleichbedeutend mit denen im textilen Bereich verwendeten Begriffen "Faser" oder "Haar". Ein Filament im Sinne dieser Anmeldung ist auch eine längere Struktur, die mit zwei oder mehr Punkten an eine Oberfläche gebunden ist. Der Bereich zwischen zwei Kontaktpunkten definiert dann im Sinne dieser Anmeldung die Länge des Filamentes.

Soweit in diesem Anmeldungstext ein Filament im Sinne der Textilindustrie gemeint ist, d.h. aus langen Fasern bestehende Strukturen, deren Länge nur durch das Aufwickelvermögen einer Spüle beschränkt ist, wird der Begriff "Textilfilament" verwendet. Solche Textilfilamente sind viele Meter lang.

An der erfindungsgemäßen Oberfläche befinden sich Filamente, die eine größere Länge als Durchmesser haben. Das Verhältnis von Durchmesser zu Länge (Durchmesser: Länge) liegt zwischen 1:10 und 1:20, bevorzugt 1:12 zu 1:18.

Geeignete Längen liegen im Bereich von 30 bis 6.000 µm, bevorzugt 50 bis 1000 µm, mehr bevorzugt 50 bis 200 µm sowie 1000-3000 µm.

Soweit an der Oberfläche Strukturen mit mehreren Kontaktpunkten gebunden sind, bilden diese ebenfalls Filamente mit der entsprechenden Länge soweit zwischen zwei Kontaktpunkten die entsprechenden Abstände vorliegen, d.h. es wird die Länge der Strukturen zwischen zwei Kontaktpunkten gemessen; dies ist die Länge des Filaments.

Die Filamente weisen zwei Stirnseiten auf, die sich jeweils am Ende der Filamente befinden.

In einer Ausführungsform ist genau eine Stirnseite an die Oberfläche gebunden. In einer anderen Ausführungsform sind beide Stirnseiten gebunden, so dass das Filament an der Oberfläche eine Schlaufe bildet. Es sind auch Mischformen möglich, in denen Filamente vorkommen, die mit einer Stirnseite gebunden sind und auch Filamente vorkommen, die mit beiden Stirnseiten gebunden sind.

Die Durchmesser von Filamenten lassen sich beispielsweise mittels Rasterelektronenmikroskopie vermessen.

Soweit die Fasern über die Länge unterschiedliche Durchmesser aufweisen, wird der Durchmesser in der Mitte des Filamentes (50% der Länge) zugrundegelegt.

Die Filamente befinden sich auf der Oberfläche in einem Abstand, wobei das Verhältnis von Abstand zur Länge der Filamente (Abstand:Länge) zwischen 1:3 und 1:10 liegt, d.h. für ein Filament mit einer Länge von 6.000 µm befindet sich ein benachbartes Filament im Bereich von 2.000 bis 600 µm.

In einer Ausführungsform kann das Verhältnis auch im Bereich von 1:3 bis 1:30 liegen.

Wichtig für die erfindungsgemäße Oberfläche ist die Elastizität der Filamente. Die Elastizität, bestimmt als E-Modul, liegt im Bereich von 10⁴ bis 10¹⁰ N/m². Die Elastizität erlaubt eine Auslenkung der Filamente. Bevorzugte Bereiche liegen zwischen 10⁶ und 10⁸ N/m². Bevorzugt liegt auch das Biege-E-Modul in diesem Bereich.

Weiterhin muss die Oberfläche des Filamentes zumindest teilweise hydrophob sein, so dass der Kontaktwinkel zwischen einem Filament und Wasser größer als 100° ist. Das lässt sich beispielsweise mittels einem inversen Mikroskop und Ultraschallverneblung vermessen, wie dies in Suter et al., Journal of A-rachnology, 32 (2004), Seiten 11 bis 21 beschrieben ist. Bevorzugt liegt der Kontaktwinkel bei mehr als 110°.

In einer anderen Ausführungsform lässt sich die Hydrophobizität auch makroskopisch messen. Erfindungsgemäße Materialien haben bevorzugt makroskopische Kontaktwinkel von mehr als 140°.

Solche erfindungsgemäßen Oberflächen sind überraschenderweise in der Lage, Luft in den Strukturen so einzuschließen, dass sie durch Wasser nicht verdrängt wird; die Oberflächen sind also unbenetzbar. Wichtig ist insbesondere die Elastizität der Filamente, da diese es auch bei Strömungen erlaubt, die Luft zu halten. Bewegungen des Wassers können von den Filamenten elastisch aufgenommen werden.

In einer Ausführungsform hat das Filament selbst eine Struktur, die Erhebungen umfasst, die eine Höhe von 20 Nanometer bis 10 µm aufweisen. Bevorzugt sind die Erhebungen kleiner als 10% des Durchmessers des Filamentes.

Bevorzugte Ausführungsformen dieser Erfindung sind beim Inkontaktbringen mit Wasser unbenetzt. Unbenetzt bedeutet, dass beim vollständigen Untertauchen der Oberfläche in Wasser in einer Tiefe von 15 cm für 48 Stunden nach dem Auftauchen des Gegenstandes mindestens 97% der Oberfläche nach makroskopischer Prüfung trocken sind.

Ebenfalls offenbart ist auch ein Verfahren zur Herstellung entsprechender Gegenstände mit den Schritten

Herstellen einer Oberfläche mit Filamenten, so dass diese
- Filamente aufweist, die eine Länge von 30 bis 6000 µm, ein Verhältnis von Durchmesser zu Länge zwischen 1:10 und 1:20 haben und mit mindestens einer Stirnseite an die Oberfläche gebunden sind,
- wobei der Abstand zwischen zwei Filamenten auf der Oberfläche so ist, dass das Verhältnis von Abstand zur Länge der Filamente zwischen 1:3 und 1:10 ist
- die Filamente eine Elastizität von 10⁴ bis 10¹⁰ N/m² aufweisen
- die Oberfläche der Filamente zumindest teilweise hydrophob ist, sodass der Kontaktwinkel zwischen einem Filament und Wasser größer als 100° ist.

Die erfindungsgemäßen Strukturen sind in der Lage, dauerhaft unter Wasser Luftschichten an der Oberfläche zu halten. Hierdurch können eine oder mehrere der folgende Eigenschaften erreicht werden
- Reduzierung der Reibung;
- Unterbindung der Korrosion, insbesondere auch Biofouling;
- Thermoisolation.

Interessante Anwendungen sind Anwendungen, in denen Strukturen dauerhaft in Flüssigkeiten bzw. Wasser eingetaucht sind, beispielsweise Boots- und Schiffsrümpfe, Rohrleitungen, etc.

Eine Möglichkeit entsprechende Strukturen herzustellen, sind sogenannte Mikroreplikverfahren. Hierzu wird die Oberfläche eines Materials, das entsprechende Eigenschaften aufweist, mittels einer Abformmasse in ein Negativ überführt. Diese Form kann dann benutzt werden, um mittels eines flüssigen Kunststoffes, beispielsweise eines Kunstharzlackes, entsprechende Oberflächen herzustellen.

In einer besonders bevorzugten Ausführungsform werden mehrere entsprechender Formen verwendet, um größere Flächen erhalten zu können.

Besonders geeignet ist ein Verfahren, bei dem die Negativformen zu einer Walze zusammengesetzt werden. Auf diesem Wege kann die Herstellung kontinuierlich erfolgen, in dem eine aushärtbare Kunststoffmasse durch die Walze geführt wird. Direkt nach der Formung wird die Kunstharzmasse durch Strahlung beispielsweise Ultraviolettstrahlung, ausgehärtet und verbleibt dann in der durch die Form vorgegebenen Oberflächenstruktur.

Die Figuren 1 bis 5 zeigen schematisch verschiedene Wege zu den erfindungsgemäßen Strukturen.

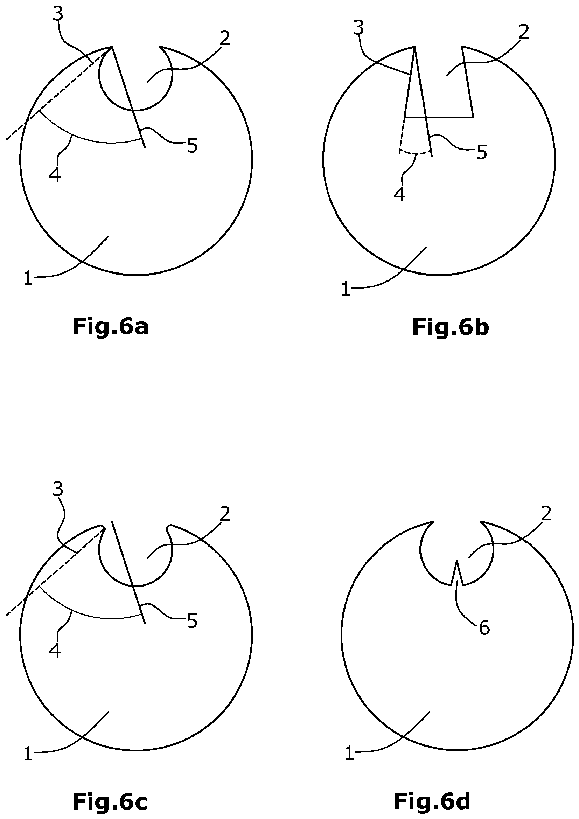

Die Figuren 6a bis d zeigen verschiedene Querschnitte durch die erfindungsgemäßen Filamente und zeigen die Möglichkeiten von Einschnitten, insbesondere Hinterschneidung.

Die Erfindung wird durch die folgenden Beispiele näher erläutert.

### Beispiel 1

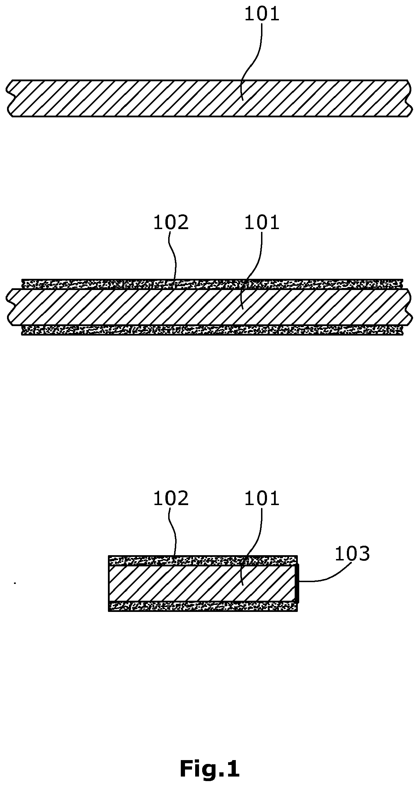

Wie in Figur 1 gezeigt wird, wird eine hydrophile Faser 101 im ersten Prozessschritt mit geeigneten Mitteln 102 hydrophobisiert. Nachfolgend wird diese Faser für eine Beflockung zerschnitten, wobei die Abschnitte eine einheitliche Länge im Bereich von 30 bis 6000 µm aufweisen. Die zerschnittene Faser wird zur Beflockung eingesetzt. Das apikale Ende 103 der Faser ist durch das Zerschneiden nicht hydrophob.

### Beispiel 2

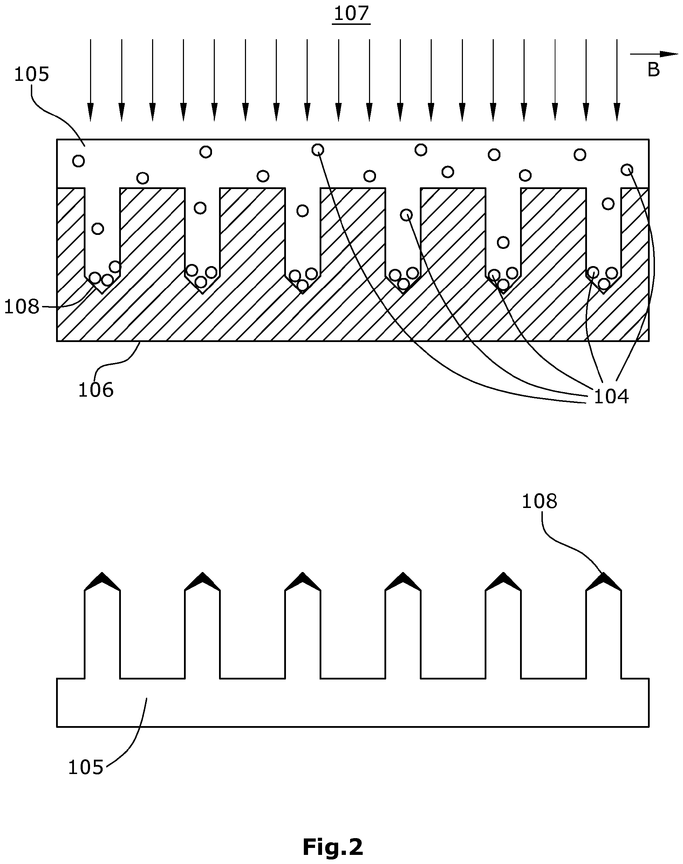

Wie in Figur 2 gezeigt wird, wird ein mit einer hydrophilen Metallverbindung 104 (z.B. Metall(hydr)oxide von Silizium, Aluminium, Magnesium) versetzter Kunststoff 105 in eine Negativform 106 der Oberfläche gebracht. Durch den Einsatz eines Magnetfeldes 107 an den, später dem Wasser zugewandten, hydrophilen, Bereichen, lagern sich die Metalle gezielt dort ab, und bilden in einem ansonsten hydrophoben Kunststoff die hydrophilen Bereiche 108 der gewünschten Oberfläche.

### Beispiel 3

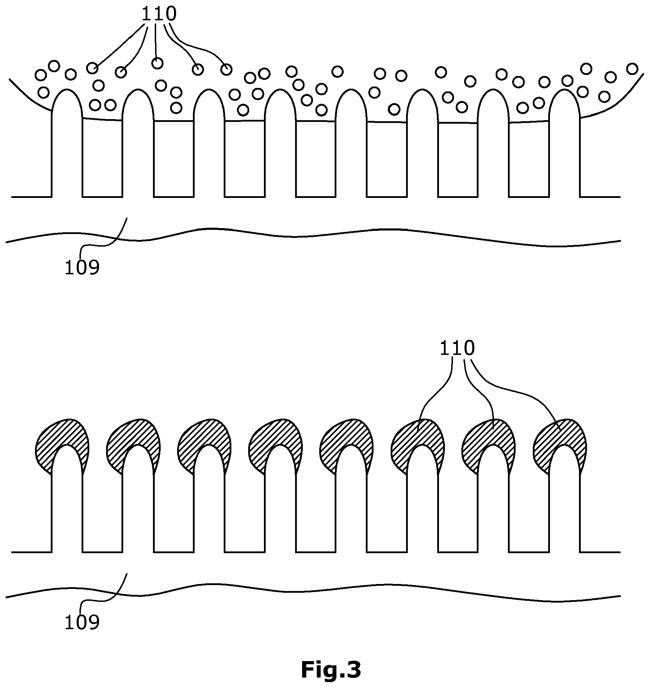

Wie in Figur 3 gezeigt wird, wird eine hydrophobe, beispielsweise faserbeschichtete Oberfläche 109 in Wasser eingetaucht oder mit Wasser überzogen. Im Wasser befindet sich ein hydrophiles Pulver 110, welches sich bevorzugt an den Spitzen der Strukturen anlagert. Dieser Effekt wird verstärkt, wenn das Wasser an der Oberfläche austrocknet. Alternativ wird in eine nicht benetzende Flüssigkeit eingetaucht. Als Flüssigkeit können Säuren oder Laugen, galvanische Flüssigkeiten dienen. Durch Ätzung oder Galvanisieren kann lokal an den Kontaktstellen eine chemische oder strukturelle Veränderung verursacht werden.

In einer weiteren Ausführungsform wird beim Eintauchen an den benetzten Stellen eine chemische Komponente abgesetzt, die durch Selbstorganisation eine Struktur hervorruft, z.B. Nanoröhrchen, Nanorods, etc.

### Beispiel 4

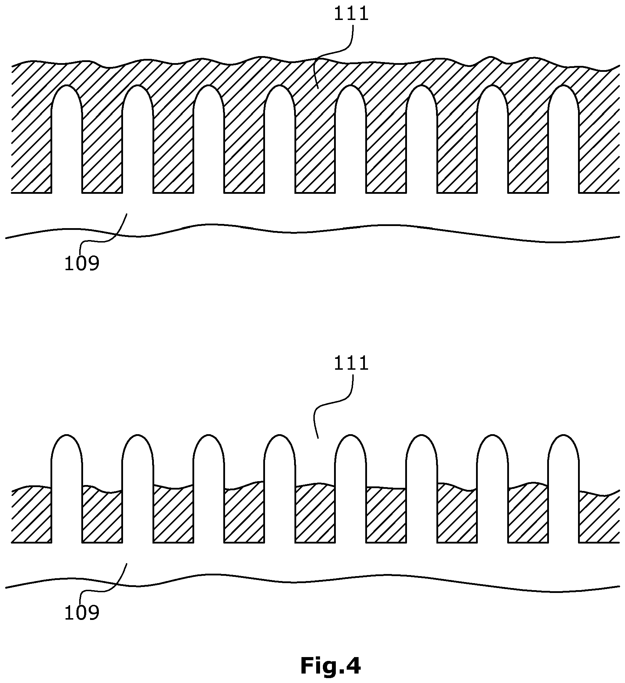

Wie in Figur 4 gezeigt wird, wird eine Struktur 109 mit einem bei niedrigen Temperaturen verdampfenden Öl 111 getränkt. Durch Erhitzen verdampft das Öl allmählich, so dass die Spitzen der Strukturen sichtbar werden. Diese Spitzen werden hydrophilisiert durch Einsatz von Plasma oder ähnlichem.

### Beispiel 5

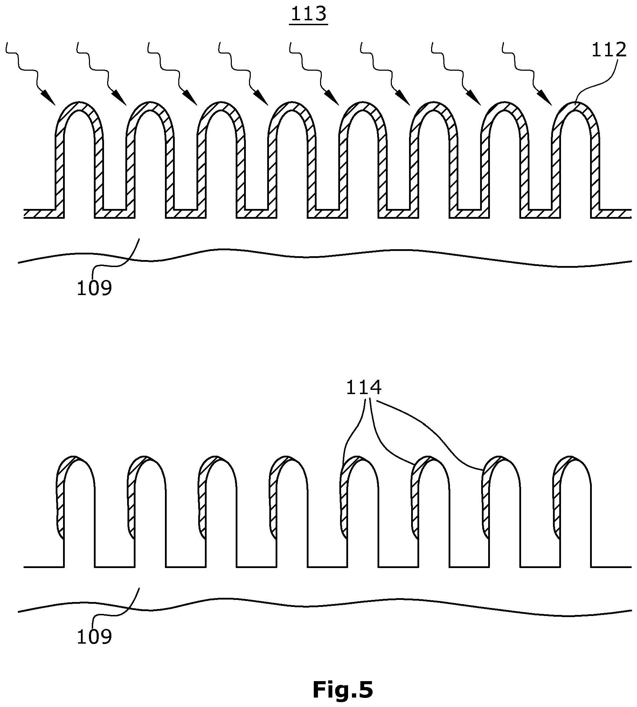

Wie in Figur 5 gezeigt wird, werden die Spitzen der Struktur 109 mit einem photoempfindlichen Lack 112 beschichtet. Die gesamte Oberfläche wird mit schräg einfallendem Licht 113 belichtet. Dadurch werden ausschließlich nur bestimmte Stellen der Oberfläche "entwickelt". Durch Ätzung oder Auftragen von für diese Stellen bindungsspezifischer Stoffe (beispielsweise über CVD oder PVD) wird nur an diesen Stellen 114 Hydrophobie oder Struktur erreicht.

### Beispiel 6

Eine weitere Ausführungsform ist die Verwendung von hinterschnittenen elektrostatisch aufladbaren Mikrofaser als Beflockungsmittel.

## Patentansprüche

1. Gegenstand mit einer Oberfläche, die
• Filamente aufweist, die eine Länge von 30 bis 6000 µm, ein Verhältnis von Durchmesser zu Länge zwischen 1:10 und 1:20 haben und mit mindestens einer Stirnseite an die Oberfläche gebunden sind,
• wobei der Abstand zwischen zwei Filamenten auf der Oberfläche so ist, dass das Verhältnis von Abstand zur Länge der Filamente zwischen 1:3 und 1:10 liegt,
• die Filamente eine Elastizität von 10⁴ bis 10¹⁰ N/m² aufweisen
• die Oberfläche der Filamente zumindest teilweise hydrophob ist, sodass der Kontaktwinkel zwischen einem Filament und Wasser größer als 100° ist,
**dadurch gekennzeichnet, dass** die Filamente mindestens einen Bereich aufweisen, der hydrophil ist, so dass der Kontaktwinkel zwischen dem Bereich und Wasser < 90° ist.

2. Gegenstand nach Anspruch 1, **dadurch gekennzeichnet, dass** die Filamente Einschnitte aufweisen, die Hinterschneidungen bilden.

3. Gegenstand nach mindestens einem der Ansprüche 1 oder 2, **dadurch gekennzeichnet, dass** die Filamente in Längsrichtung Einschnitte aufweisen.

4. Gegenstand nach mindestens einem der Ansprüche 1 bis 3, **dadurch gekennzeichnet, dass** das Filament mit einer Struktur versehen ist, die Erhebungen umfasst, die eine Höhe von 20 nm bis 10 µm aufweisen.

5. Gegenstand nach mindestens einem der Ansprüche 1 bis 4, **dadurch gekennzeichnet, dass** die Filamente mit beiden Stirnseiten an die Oberfläche gebunden sind.

6. Gegenstand nach mindestens einem der Ansprüche 1 bis 5, **dadurch gekennzeichnet, dass** die Filamente mindestens einen Bereich aufweisen, der elektrostatisch geladen ist.

7. Verwendung eines Gegenstandes nach einem der Ansprüche 1 bis 6 zur Erzielung einer Unbenetzbarkeit.

## Claims

1. An object having a surface that has:
• filaments having a length of from 30 to 6000 µm, a diameter to length ratio of from 1:10 to 1:20, and are bound to the surface with at least one front face thereof;
• wherein the distance between two filaments on the surface is such that the ratio of such distance to the length of the filaments is from 1:3 to 1:10;
• the filaments have an elasticity of from 10⁴ to 10¹⁰ N/m²;
• the surface of the filament is at least partially hydrophobic, so that the contact angle between a filament and water is greater than 100°,
**characterized in that** the filaments have at least one region that is hydrophilic, so that the contact angle between this region and water is < 90°.

2. The object according to claim 1, **characterized in that** said filaments have incisions that form indentations.

3. The object according to at least one of claims 1 or 2, **characterized in that** said filaments have incisions in a longitudinal direction.

4. The object according to at least one of claims 1 to 3, **characterized in that** said filament is provided with a structure comprising elevations with a height of from 20 nm to 10 µm.

5. The object according to at least one of claims 1 to 4, **characterized in that** said filaments are bound to the surface with both front faces thereof.

6. The object according to at least one of claims 1 to 5, **characterized in that** said filaments have at least one region that is electrostatically charged.

7. Use of the object according to any of claims 1 to 6 for achieving non-wettability.

## Revendications

1. Objet, ayant une surface
• laquelle présente des filaments qui ont une longueur de 30 à 6 000 µm, un rapport du diamètre à la longueur entre 1:10 et 1:20 et qui sont liés à la surface par au moins un côté frontal,
• la distance entre deux filaments sur la surface étant telle que le rapport de la distance à la longueur des filaments est compris entre 1:3 et 1:10,
• les filaments présentant une élasticité de 10⁴ à 10¹⁰ N/m²,
• la surface des filaments étant au moins partiellement hydrophobe de telle sorte que l'angle de contact entre un filament et l'eau est supérieur à 100°,
**caractérisé en ce que** les filaments présentent au moins une zone qui est hydrophile de telle sorte que l'angle de contact entre ladite zone et l'eau est < 90°.

2. Objet selon la revendication 1, **caractérisé en ce que** les filaments présentent des entailles qui forment des contre-dépouilles.

3. Objet selon au moins l'une des revendications 1 ou 2, **caractérisé en ce que** les filaments présentent des entailles dans la direction longitudinale.

4. Objet selon au moins l'une des revendications 1 à 3, **caractérisé en ce que** le filament est muni d'une structure qui comprend des reliefs qui présentent une hauteur de 20 nm à 10 µm.

5. Objet selon au moins l'une des revendications 1 à 4, **caractérisé en ce que** les filaments sont liés à la surface par les deux côtés frontaux.

6. Objet selon au moins l'une des revendications 1 à 5, **caractérisé en ce que** les filaments présentent au moins une zone qui est chargée de façon électrostatique.

7. Utilisation d'un objet selon l'une des revendications 1 à 6, destinée à obtenir une absence de mouillabilité.
